# EUROPÄISCHE PATENTSCHRIFT

(11) **EP 3 523 519 B1**
(45) Veröffentlichungstag und Bekanntmachung des Hinweises auf die Patenterteilung: **11.11.2020**
(21) Anmeldenummer: 17772706.2
(22) Anmeldetag: 26.09.2017
(51) Int. Cl.: F01N 3/20, F01N 11/00, G01N 22/00

(54) **KATALYSATOR-ALTERUNGSERKENNUNG OHNE ZUSÄTZLICHE SYSTEMKOMPONENTE**
IDENTIFICATION OF CATALYST AGEING WITHOUT ADDITIONAL SYSTEM COMPONENTS
DÉTECTION DU VIEILLISSEMENT D'UN CATALYSEUR SANS ÉLÉMENT SYSTÈME SUPPLÉMENTAIRE

(30) Priorität: 10.10.2016 DE 102016219644
(43) Veröffentlichungstag der Anmeldung: 14.08.2019
(73) Patentinhaber: Vitesco Technologies GmbH, 30165 Hannover (DE)
(72) Erfinder: MOOS, Ralf, 95447 Bayreuth (DE); REITMEIER, Willibald, 93155 Hemau (DE); DIETRICH, Markus, 93047 Regensburg (DE); SCHÄDLICH, Denny, 08223 Neustadt (DE); HIEN, Markus, 93096 Köfering (DE); BURGER, Katharina, 93055 Regensburg (DE); HAGEN, Gunter, 95131 Schwarzenbach a. Wald (DE)
(74) Vertreter: Waldmann, Georg Alexander
(86) Internationale Anmeldenummer: PCT/EP2017/074411
(87) Internationale Veröffentlichungsnummer: WO 2018/069039

(56) Entgegenhaltungen:
- WO-A1-2015/090342
- DE-A1-102011 107 784
- US-A1- 2016 169 073

## Beschreibung

Mit Verbrennungsmotoren betriebene Pkw oder Lkw sind zu einem festen Bestandteil der modernen Gesellschaft geworden. Die Automobilindustrie hat es sich zur Aufgabe gemacht Fahrzeuge zu entwickeln die sich durch niedrige Schadstoffemissionen auszeichnen und gleichzeitig kostengünstig herstellbar sind. Insbesondere sind Stickoxidminderungstechnologien im Entwicklungsfokus.

Zur Reduktion der Stickoxidkonzentration (NOx) im Abgas werden deshalb neue Methoden zur Abgasreinigung entwickelt. Eine Methode ist die Verwendung eines Ammoniak-SCR-Systems. Dieses System ist insbesondere zur Senkung des NOx-Ausstoßes sowohl bei LKWs als auch bei PKWs vorteilhaft.

In einer Ausführungsform des SCR-Systems wird eine Harnstoffwasserlösung als Reduktionsmittel in die Abgasanlage des Fahrzeugs eingespritzt. Dieses flüssige Reduktionsmittel wird in der Abgasanlage verdampft und letztendlich in gasförmigen Ammoniak (NH3) umgewandelt. Mit Hilfe dieses Ammoniaks werden im Ammoniak-SCR-Katalysator die schädlichen Stickoxide (NOx) zu Stickstoff (N2) und Wasser (H20) umgewandelt. Damit die Ammoniak-SCR-Reaktion stattfinden kann, muss zunächst Ammoniak im SCR-Katalysator adsorbiert, also eingelagert, werden. Der NOx-Umsatz kann, insbesondere bei niedrigen Katalysatortemperaturen, stark von der Menge an dem eingespeicherten Ammoniak abhängen.

Die WO 2015/090342 A1 beschreibt ein System zur Messung der NH3-Verteilung entlang der X-Achse in einem SCR Katalysator. Die Messung erfolgt auf Basis einer Messung der Differenz von abgestrahlten und reflektierten Mikrowellen.

Es ist die Aufgabe der Erfindung, die Alterung eines SCR-Katalysators einfach und genau zu bestimmen.

Diese Aufgabe wird durch die Gegenstände der unabhängigen Ansprüche gelöst. Ausführungsformen und Weiterbildungen sind den abhängigen Ansprüchen, der Beschreibung und den Figuren zu entnehmen.

Ein erster Aspekt der vorliegenden Erfindung betrifft ein Katalysatormesssystem zur Alterungsbestimmung eines SCR-Katalysators für ein Fahrzeug gemäß den Merkmalen von Anspruch 1.

Das Katalysatormesssystem soll zu Beginn des Messvorgangs einen Ammoniak freien SCR-Katalysator aufweisen, bzw. einen Katalysator der sich in einem definierten, stabilen Betriebspunkt befindet. Ein definierter, stabiler Betriebspunkt kann bei konstanter Temperatur, bei konstantem Abgasvolumenstrom und/oder bei gleichbleibender AGR-Rate (Abgasrückführungsrate) vorhanden sein. Die Ammoniak-Dosierung des Ammoniak-Dosiersystems kann hierfür ausgeschaltet werden. Das Katalysatormesssystem kann ohne Ammoniak-Dosierung betrieben werden, bis die Hochfrequenz-Messanordnung einen konstanten Wert für die Ammoniakbeladung erfasst, dann ist der SCR-Katalysator frei von Ammoniak. Die Hochfrequenz-Messanordnung kann über kleine Koppelelemente, z.B. Antennen, elektromagnetische Wellen in den Abgasstrang einkoppeln und die Reflexion oder die Transmission der ausgesendeten elektromagnetischen Wellen kann gemessen werden. Die elektromagnetischen Wellen korrelieren mit dem Beladungszustand des SCR-Katalysators. Das metallische Katalysatorgehäuse stellt einen elektrischen Hohlraumresonator dar. Als Sensoren können ein oder zwei einfache Antennen dienen, beispielsweise koaxiale Stiftkoppler oder Loop-Koppler, die in das Katalysatorgehäuse eingebracht werden. Die di-/elektrischen Eigenschaften des SCR-Katalysators werden durch seinen keramischen Wabenkörper inkl. der Beschichtung und des Speichermaterials bestimmt und können durch die Hochfrequenz-Messanordnung gemessen werden.

Bei Abgaskatalysatoren kann die Änderung des Resonanzverhaltens, beispielsweise die aus den Reflexionskoeffizienten erhaltene Resonanzfrequenz, als Signalmerkmal genutzt werden. Alternativ kann die Transmission als Signalmerkmal verwendet werden, welches jedoch zwei Antennen erfordert.

Werden durch eine Antenne hochfrequente elektromagnetische Wellen in einen Hohlraumresonator eingekoppelt, bilden sich in diesem mehrere stehende Wellen aus, die als Moden bezeichnet werden. Jede Mode weist ein eigenes Schwingungsbild bei der jeweiligen Resonanzfrequenz auf. Diese ausgeprägten Resonanzstellen ändern ihre Frequenz und Dämpfung in Abhängigkeit des Beladungszustandes des SCR-Katalysators. Somit kann es möglich sein, mit Hilfe dieser Hochfrequenz-Messanordnung die Ammoniakbeladung des SCR-Katalysators direkt zu messen.

Für die Alterungserkennung kann darauf mit einer konstanten Dosierrate gezielt Ammoniak dosiert und solange überdosiert werden, bis alle Speicherstellen des SCR-Katalysators besetzt sind und eine Sättigung des SCR-Katalysators erreicht wird. Beide Messparameter der Hochfrequenz-Messanordnung, die Resonanzfrequenz und die dielektrischen Verluste, zeigen eine direkte Korrelation zu dem eingespeicherten Ammoniak und gehen ebenfalls in Sättigung, bzw. die Messparameter erreichen ein stabiles Plateau. Somit kann die maximale Speicherfähigkeit des Katalysators über die Hochfrequenzsignale ermittelt werden. Ist der Katalysator gealtert, so nimmt dessen katalytische Wirkung und Speicherfähigkeit ab. Umgekehrt ist diese also ein Maß für die NOx-Konvertierungsrate. Durch seine verringerte Speicherfähigkeit erreicht der SCR-Katalysator ein niedrigeres Plateau, zusätzlich erreicht der gealterte SCR-Katalysator bei identischer Ammoniak-Dosierrate das Plateau auch schneller. Beide Effekte sind ebenfalls in den beiden Messparametern ersichtlich.

Als Maß für die Alterungsbestimmungen können nun die Höhe der Plateaus, welche der maximale Speichermenge entspricht, der beiden Hochfrequenzsignale bei Sättigung, oder auch die benötigte Zeit bis zum Erreichen der Plateaus herangezogen werden. Beides, Höhe der Plateaus sowie die Zeit bis zur Erreichung des Plateaus, verringern sich mit zunehmendem Alter bzw. abnehmender Aktivität des SCR-Katalysators, zumeist ist dies sogar ein lineares Verhalten. Das System kann ausgeführt sein, die Alterungserkennung in bestimmten, bspw. regelmäßigen Abständen durchzuführen, sodass der Alterungszustand des Katalysators überwacht werden kann. Alternativ kann der Gradient, also die Änderung der Resonanzfrequenz bzw. der dielektrischen Verluste, für die Alterungsbestimmung herangezogen werden. Für das Katalysatormesssystem muss kein extra NOx-Sensor zur Alterungserkennung vorgesehen sein, die Alterungsbestimmung erfolgt ausschließlich über das Hochfrequenz-Messsystem. Die vollständige Entleerung sowie die Sättigung können in konstanten Betriebspunkten eigenständig durch das Katalysatormesssystem ermittelt werden. Die Hochfrequenz-Messanordnung kann die maximal mögliche Ammoniakbeladung des SCR-Katalysators messen.

Solche Hochfrequenz-Messsysteme eignen sich prinzipiell auch für die Bestimmung der Sauerstoffbeladung von Dreiwegekatalysatoren, Lean NOx Traps (LNT), Dieseloxidationskatalysatoren (DOC) oder für die Rußbeladungsmessung von Partikelfiltern. Somit kann das vorhergehend und nachfolgend beschriebene System auch bei diesen Katalysatoren / Partikelfiltern Anwendung finden.

Das Ammoniak-Dosiersystem kann aus einer Einspritzdüse, zum Einspritzen des Ammoniaks in die Abgasanlage, einem Vorratstank für den Ammoniak, einer Pumpe, einer Heizung für den Vorratstank und den Leitungen bestehen. Ferner kann das Ammoniak-Dosiersystem weitere Komponenten aufweisen.

Eine Ausführungsform der Erfindung sieht vor, dass das Ammoniak-Dosiersystem bis zur Sättigung des SCR-Katalysators Ammoniak in die Abgasanlage des Fahrzeugs einspritzt.

Der SCR-Katalysator kann zu Beginn der Alterungsmessung komplett von Ammoniak befreit werden, sodass kein Ammoniak mehr in dem SCR-Katalysator eingelagert ist. Sobald der SCR-Katalysator vom Ammoniak befreit ist, kann das Ammoniak-Dosiersystem gezielt Ammoniak in die Abgasanlage einspritzen und überdosieren, sodass sich Ammoniak im SCR-Katalysator ablagert. Alternativ kann zu Beginn der Messung eine kleine Ammoniak Restbeladung vorliegen. Das Ammoniak-Dosiersystem kann so lange Ammoniak einspritzen bis der SCR-Katalysator vollständig mit Ammoniak beladen ist. In diesem Fall ist der SCR-Katalysator gesättigt. Die Höhe des Plateaus kann gemessen werden und mit der Referenz verglichen werden.

Eine weitere Ausführungsform der Erfindung sieht vor, das die Hochfrequenz-Messanordnung die Resonanzfrequenz des SCR-Katalysators misst.

Die Hochfrequenz-Messanordnung kann zu Bestimmung der Ammoniakbeladung des SCR-Katalysators die Resonanzfrequenz des SCR-Katalysators messen. Die Resonanzfrequenz des SCR-Katalysators ändern sich abhängig von der Menge an eingelagertem Ammoniak im SCR-Katalysator. Kann kein Ammoniak mehr durch den SCR-Katalysator aufgenommen werden, bleibt die Resonanzfrequenz konstant. Der Verlauf der Ammoniakbeladung, also wie schnell das Plateau erreicht wird, stellt auch einen wichtigen Faktor dar.

Gemäß einer Ausführungsform ist der vordefinierte Schwellwert die Resonanzfrequenz des voll beladenen SCR-Katalysators im Neuzustand.

Die Alterung kann das Katalysatormesssystem berechnen, indem die gemessenen Parameter mit einem vordefiniertem Schwellwert verglichen werden. Abhängig von dem Vergleich können Rückschlüsse auf den Alterungszustand des SCR-Katalysators gezogen werden. Als ein möglicher Schwellwert kann die Resonanzfrequenz des vollbeladenen SCR-Katalysators im Neuzustand dienen. Somit kann die Alterung des SCR-Katalysators in Bezug auf den Neuzustand ermittelt werden, bzw. eine prozentuale Alterung angegeben werden. Eine Alternative kann die Resonanzfrequenz der letzten gültigen Messung des Katalysatormesssystems sein. Somit kann die Alterung Schritt für Schritt nachvollzogen werden.

Eine Ausführungsform der vorliegenden Erfindung sieht vor, dass das Steuergerät ausgeführt ist, durch den Vergleich von gemessener Resonanzfrequenz und dem Schwellwert der Resonanzfrequenz den Alterungszustand des SCR-Katalysators zu bestimmen.

Mit anderen Worten, das Steuergerät des Katalysatormesssystems kann die gemessene Resonanzfrequenz mit der gespeicherten Resonanzfrequenz vergleichen und aus diesem Vergleich Rückschlüsse auf den Alterungszustand des SCR-Katalysators ziehen. Je älter der SCR-Katalysator ist, desto niedriger ist die Menge an eingelagertem Ammoniak im SCR-Katalysator und somit ist die Resonanzfrequenz des SCR-Katalysators höher.

Eine weitere Ausführungsform der Erfindung sieht vor, dass die Hochfrequenz-Messanordnung die dielektrischen Verluste des SCR-Katalysators misst.

Die Hochfrequenz-Messanordnung kann zur Bestimmung der Ammoniakbeladung des SCR-Katalysators auch die dielektrischen Verluste des SCR-Katalysators messen. Die dielektrischen Verluste des SCR-Katalysators ändern sich abhängig von der Menge an eingelagertem Ammoniak im SCR-Katalysator. Kann kein Ammoniak mehr durch den SCR-Katalysator aufgenommen werden, bleiben die dielektrischen Verluste konstant.

Eine Ausführungsform der Erfindung sieht vor, dass der vordefinierte Schwellwert die dielektrischen Verluste des voll beladenen SCR-Katalysators im Neuzustand sind.

Die Alterung kann das Katalysatormesssystem berechnen indem die gemessenen Daten mit einem vordefiniertem Schwellwert verglichen werden. Abhängig von dem Vergleich können Rückschlüsse auf den Alterungszustand des SCR-Katalysators gezogen werden. Als ein möglicher Schwellwert können die dielektrischen Verluste des vollbeladenen SCR-Katalysators im Neuzustand dienen. Somit kann die Alterung des SCR-Katalysators in Bezug auf den Neuzustand ermittelt werden, bzw. eine prozentuale Alterung angegeben werden. Eine Alternative können die dielektrischen Verluste der letzten gültigen Messung des Katalysatormesssystems sein. Somit kann die Alterung Schritt für Schritt nachvollzogen werden.

Eine weitere Ausführungsform sieht vor, dass das Steuergerät ausgeführt ist, durch den Vergleich der gemessenen dielektrischen Verluste und dem Schwellwert der dielektrischen Verluste den Alterungszustand des SCR-Katalysators zu bestimmen.

Mit anderen Worten, das Steuergerät des Katalysatormesssystems kann die gemessenen dielektrischen Verluste mit den gespeicherten dielektrischen Verlusten vergleichen und aus diesem Vergleich Rückschlüsse auf den Alterungszustand des SCR-Katalysators ziehen.

Ein weiterer Aspekt der Erfindung betrifft ein Fahrzeug mit einem SCR-Katalysator und einem Katalysatormesssystem zur Bestimmung der Alterung eines SCR-Katalysators.

Ein Fahrzeug kann mit dem Katalysatormesssystem ausgerüstet sein, um den NOx-Ausstoß des Fahrzeugs zu senken. Damit eine einwandfreie Funktionsweise des SCR-Katalysators sichergestellt werden kann, wird das Katalysatormesssystem verbaut. Das Katalysatormesssystem kann den Alterungszustand des SCR-Katalysators bestimmen und die eingelagerte Menge an Ammoniak im SCR-Katalysator messen. Werden gewissen Grenzwerte über- oder unterschritten, kann das Katalysatormesssystem diese melden oder gegebenenfalls die Regelung des Ammoniak-Dosiersystems anpassen. Das Fahrzeug kann ein Benzin-, Diesel- Bio-Fuels, synthetische Kraftstoffe oder Gasfahrzeug sein. Auch kann die Erfindung in Hybridfahrzeugen mit einem Verbrennungsmotor eingesetzt werden.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie ein Helikopter oder ein Flugzeug.

Ein weiterer Aspekt dieser Erfindung betrifft ein Verfahren zur Bestimmung des Alterungszustandes eines SCR-Katalysators gemäß den Merkmalen von Anspruch 11.

Das Verfahren zur Bestimmung des Alterungszustandes eines SCR-Katalysators weist mehrere Schritte auf. Zu Beginn des Verfahrens können die Referenzparameter für einen späteren Vergleich generiert werden. Hierfür können sowohl das Verhalten eines SCR-Katalysators im Neuzustand oder optional vorzugsweise die letzte gültige Messung herangezogen werden. Anschließend kann mit der eigentlichen Messung des SCR-Katalysators begonnen werden, hierzu kann ein konstanter Betriebspunkt des SCR-Katalysators angefahren werden. In diesem konstanten Betriebspunkt sollte die Temperatur, der Volumenstrom und die AGR-Rate konstant gehalten werden. Des Weiteren wird in dieser Phase kein Ammoniak durch das Ammoniak-Dosiersystem in die Abgasanlage eingespritzt, sodass der eingelagerte Ammoniak im SCR-Katalysator mit dem NOx aus den Abgasen reagiert. Der SCR-Katalysator ist somit frei von Ammoniak oder besitzt alternativ noch eine geringe Restmenge an Ammoniak. Im Anschluss spritzt das Ammoniak-Dosiersystem solange Ammoniak in die Abgasanlage ein bis der SCR-Katalysator komplett beladen ist und keinen weiteren Ammoniak einlagern kann. Die eingespritzte Menge an Ammoniak muss in diesem Fall natürlich größer sein als der Verbrauch des Ammoniaks durch die Umwandlung von NOx in N2 und H2O. Die Ammoniakbeladung des SCR-Katalysators wird durch die Hochfrequenz-Messanordnung über die komplette Zeitdauer der Ammoniakeinspritzung gemessen. Die gemessenen Parameter können anschließend mit den Referenzparametern verglichen werden. Aus dem Vergleich können Rückschlüsse über den Alterungszustand des SCR-Katalysators gezogen werden. Ein SCR-Katalysator kann mit zunehmender Alterung weniger Ammoniak aufnehmen, zudem erreicht der SCR-Katalysator die aufnehmbare Menge an Ammoniak auch schneller. Somit können für den Vergleich sowohl die absolute Höhe der Messparameter, als auch der zeitliche Verlauf bis zur Erreichung der Sättigung alternativ kann der Gradient in einem Teilbereich des Anstiegs herangezogen werden. Somit kann die Alterungsbestimmung des SCR-Katalysators ohne zusätzlichen Sensoren erfolgen. Dieses bedeutet jedoch nicht, dass keine weiteren Sensoren in das Katalysatormesssystem eingebaut werden können, um beispielsweise weitere Funktionen sicherzustellen.

Das Verfahren ermöglicht die Bestimmung der Alterung des SCR-Katalysators, insbesondere bezüglich seiner Ammoniak-Speicherfähigkeit, die maßgeblich Einfluss auf dessen Konvertierungsrate und somit auf dessen Funktionsweise hat. Die Alterungsbestimmung erfolgt ohne die Einbeziehung weiterer Sensoren in der Abgasanlage bei definierten Betriebsbedingungen. Durch Kenntnis der maximalen Speicherfähigkeit kann im transienten Betrieb des SCR-Katalysators auf eine ideale Ammoniak-Zugabe und somit eine ideale Speichermenge geregelt werden, ohne dass unnötig viel Ammoniak verwendet wird. Dadurch werden hohe Konvertierungsraten sichergestellt sowie Ammoniak-Durchbrüche vermieden. Damit kann die Gesamtfunktion eines SCR-Systems grundsätzlich verbessert werden und ohne Ammoniak-Schlupf gefahren werden. Der Ammoniakverbrauch wird somit auf das erforderliche Minimum reduziert.

Eine Ausführungsform der Erfindung sieht vor, dass die gemessenen Parameter und die Referenzparameter die Resonanzfrequenz des SCR-Katalysators sind.

Ein Messparameter, welcher durch die Hochfrequenz-Messanordnung erfasst wird, kann die Resonanzfrequenz des SCR-Katalysators sein. Die Resonanzfrequenz hängt direkt mit der Ammoniakbeladung des SCR-Katalysators zusammen und lässt somit Rückschlüsse über den Beladungszustand zu. Sobald sich die Resonanzfrequenz trotz weiterer Ammoniak-Dosierung nicht mehr ändert, kann von der Sättigung des SCR-Katalysators ausgegangen werden. Die gemessene Resonanzfrequenz wird mit der Referenz verglichen, hieraus können Rückschlüsse auf den Alterungszustand des SCR-Katalysators geschlossen werden.

Eine weitere Ausführungsform der Erfindung sieht vor, dass die gemessenen Parameter und die Referenzparameter die dielektrischen Verluste des SCR-Katalysators sind.

Alternative Messparameter, welcher durch die Hochfrequenz-Messanordnung erfasst wird, können die dielektrischen Verluste des SCR-Katalysators sein. Die dielektrischen Verluste hängen direkt mit der Ammoniakbeladung des SCR-Katalysators zusammen und lassen somit Rückschlüsse über den Beladungszustand des SCR-Katalysators zu. Sobald sich die dielektrischen Verluste trotz weitere Ammoniak-Dosierung nicht ändern, kann von der Sättigung des SCR-Katalysators ausgegangen werden. Die gemessenen dielektrischen Verluste werden mit der Referenz verglichen, hieraus können Rückschlüsse auf den Alterungszustand des SCR-Katalysators geschlossen werden.

Ein weiterer Aspekt der vorliegenden Erfindung betrifft ein Programmelement, das, wenn es von einem Steuergerät eines Katalysatormesssystems ausgeführt wird, das Katalysatormesssystem anleitet, das im Kontext der vorliegenden Erfindung beschriebene Verfahren durchzuführen.

Ein weiterer Aspekt der vorliegenden Erfindung betrifft ein computerlesbares Medium, auf dem ein Computerprogramm gespeichert ist, das, wenn es von einem Steuergerät eines Katalysatormesssystems ausgeführt wird, das Katalysatormesssystem anleitet, das im Kontext der vorliegenden Erfindung beschriebene Verfahren durchzuführen.

Weitere Merkmale, Vorteile und Anwendungsmöglichkeiten der Erfindung ergeben sich aus der nachfolgenden Beschreibung der Ausführungsbeispiele und Figuren. Die Figuren sind schematisch und nicht maßstabsgetreu. Sind in der nachfolgenden Beschreibung in verschiedenen Figuren die gleichen Bezugszeichen angegeben, so bezeichnen diese gleiche oder ähnliche Elemente.

Fig. 1 zeigt eine schematische Darstellung eines Katalysatormesssystems gemäß einem Ausführungsbeispiel der Erfindung.

Fig. 2 zeigt eine schematische Darstellung eines Motors mit einer Abgasanlage und dem Katalysatormesssystem gemäß einem Ausführungsbeispiel der Erfindung.

Fig. 3 zeigt ein Diagramm in welchem der zeitliche Verlauf der Ammoniakeinspritzung und der Ammoniakbeladung des SCR-Katalysators dargestellt ist.

Fig. 4 zeigt ein Flussdiagramm für ein Verfahren zur Alterungsbestimmung eines SCR-Katalysators gemäß einem Ausführungsbeispiel der Erfindung.

Fig. 5 zeigt ein Fahrzeug mit einem verbauten Katalysatormesssystem gemäß einem Ausführungsbeispiel der Erfindung.

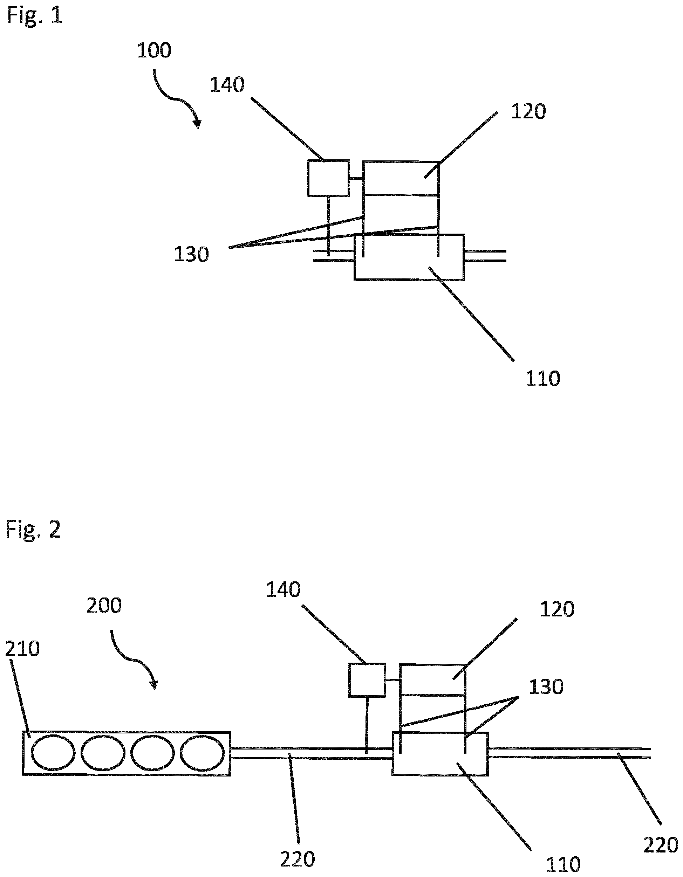

Fig. 1 zeigt eine schematische Darstellung eins Katalysatormesssystems 100. Um eine bestmögliche Umwandlung des NOx zu gewährleisten, ist es daher vorteilhaft, die gespeicherte Ammoniakmenge im SCR-Katalysator 110 zu bestimmen. Die Ammoniakbeladung kann mit Hilfe von Modellen berechnet werden, die auf Signalen verschiedenster Sensoren und Aktoren der Abgasanlage basieren. Weiterhin können Motorbetriebszustandsdaten als Eingangsgröße in die Modelle eingehen. Da die Genauigkeit der Modelle begrenzt ist und sich die Parameter auch mit der Zeit ändern, kann eine Ammoniak-Schlupf-Strategie angewendet werden. Die hierbei entstehenden Probleme sind vor allem die Ungenauigkeit des Modelles, da eine Fehlerkette der einzelnen Bestandteile existiert, z.B. in der Motorsteuerung, der Temperaturmessung, der Sensorungenauigkeiten und der Bestimmung der verschiedenen Aktorpositionen.

Um den oben beschriebenen Problemen der indirekten Messung und der Modelle zu begegnen, kann zur Bestimmung der Ammoniakbeladung eines SCR-Katalysators 110 eine direkte Messung des Beladungszustandes mit Hilfe von einer Hochfrequenz-Messanordnung 130 (HF-Messsystem), das auch als Mikrowellenverfahren bezeichnet wird, erfolgen. In der gezeigten Ausführungsform weißt die Hochfrequenz-Messanordnung 130 zwei Antennen zur Messung auf, jedoch ist auch eine Ausführungsform mit einer Antenne möglich.

Das Katalysatormesssystem 100 weist einen SCR-Katalysator 110, ein Steuergerät 120, eine Hochfrequenz-Messanordnung 130 und ein Ammoniak-Dosiersystem 140 auf. Der SCR-Katalysator 110 dient der Reinigung des Abgases eines Fahrzeugs von schädlichen NOx-Emissionen. Zur Reinigung des Abgases von NOx-Emissionen wird zusätzlich Ammoniak benötigt, dieser wird in flüssiger Form in die Abgasanlage des Fahrzeugs durch das Ammoniak-Dosiersystem 140 eingespritzt. Der eingespritzte Ammoniak verdampft und wandelt im SCR-Katalysator 110 das NOx in Stickstoff und Wasser um. Das Steuergerät 120 dient der Steuerung der Einspritzung des Ammoniaks durch das Ammoniak-Dosiersystem 140 und zudem überwacht das Steuergerät 120 den Alterungszustand des SCR-Katalysators 110. Für die gezielte Steuerung und die Alterungsbestimmung des SCR-Katalysators benötigt das Steuergerät 120 die aktuelle Ammoniakbeladung des SCR-Katalysators 110, dies wird durch die Hochfrequenz-Messanordnung 130 sichergestellt. Die Hochfrequenz-Messanordnung 130 ist in der Lage die Resonanzfrequenz und die dielektrischen Verluste des SCR-Katalysators 110 zu messen. Beide gemessenen Parameter verändern sich abhängig von der Menge des eingelagerten Ammoniaks im SCR-Katalysator 110. Das Steuergerät 120 kann die gemessenen Parameter mit den Referenzparametern vergleichen. Die Referenzparameter können sich auf den Neuzustand des SCR-Katalysators 110 beziehen oder auf die letzte gültige Messung durch das Katalysatormesssystem 100. Als Vergleichsparameter können sowohl die Höhe des Plateaus bei Sättigung der Resonanzfrequenz bzw. der dielektrischen Verluste oder die Zeit bis zur Erreichung des Plateaus bzw. der Sättigung dienen. Durch den Vergleich kann auf den Alterungszustand des SCR-Katalysators 110 geschlossen werden. Mit zunehmender Alterung nimmt die Speicherfähigkeit des SCR-Katalysators ab.

Fig. 2 zeigt das Katalysatormesssystem 100 aus Fig. 1 eingebaut in einer Abgasanlage 220 eines Fahrzeugs. Der Verbrennungsmotor 210 erzeugt bei der Verbrennung von Kraftstoff Energie und Abgase. Als Bestandteil der Abgase treten unter anderem auch Stickoxide (NOx) auf. Die Abgase werden durch die Abgasanlage 220 in die Umwelt entlassen. Damit nicht alle schädlichen Abgase in die Umwelt gelangen, werden in der Abgasanlage 220 Abgasreinigungssysteme, wie z.B. ein SCR-Katalysator 110, eingebaut. Des Weiteren wird in die Abgasanlage 220 das Katalysatormesssystem 100 verbaut, um die Alterung des SCR-Katalysators 110 zu überwachen und die Regelung des SCR-Katalysators 110 zu optimieren.

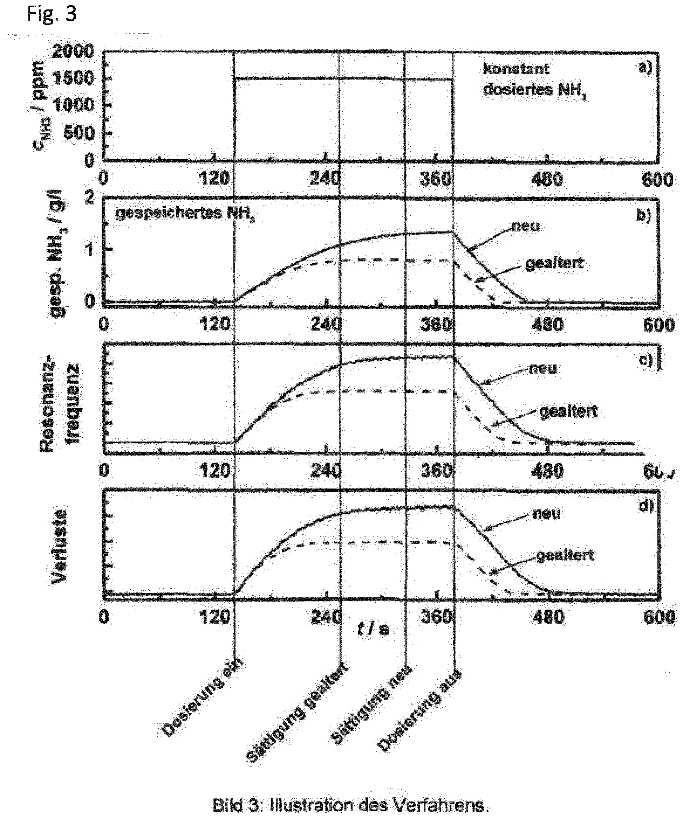

Fig. 3 zeigt ein Diagramm im welchen die Menge des eingespritzten Ammoniaks, die gespeicherte Menge an Ammoniak im SCR-Katalysator, die Resonanzfrequenz des SCR-Katalysators und die dielektrischen Verluste des SCR-Katalysators über der Zeit aufgetragen sind. Die durchgezogenen Linien beziehen sich auf einen SCR-Katalysator im Neuzustand und die gestrichelten Linien beziehen sich auf einen gealterten SCR-Katalysator. Die eingespritzte Ammoniak-Menge ist in beiden Fällen gleich. Durch die Überdosierung an Ammoniak wird der nicht verbrauchte Ammoniak in dem SCR-Katalysator eingelagert, bis dieser gesättigt ist. Die Sättigung ist durch das Plateau zu erkennen. Sobald der sich der SCR-Katalysator in Sättigung befindet, kann der SCR-Katalysator keinen weiteren Ammoniak mehr aufnehmen und der überschüssige Ammoniak wird durch den Auspuff des Fahrzeugs in die Umwelt entlassen. Das Plateau des gealterten SCR-Katalysators wird früher erreicht und hat eine geringere Höhe als bei einem neuen SCR-Katalysator. Korrespondierend zur der Menge an gespeicherten Ammoniak im SCR-Katalysator verhalten sich die Resonanzfrequenz und die dielektrischen Verluste. Sobald die Sättigung erreicht ist, ist die Resonanzfrequenz konstant. Das Verhältnis der Resonanzfrequenzen und der korrespondierenden Ammoniakbeladung des SCR-Katalysators lässt Rückschlüsse auf den Alterungszustand des SCR-Katalysators zu. Mit den dielektrischen Verlusten verhält es sich gleich wie mit der Resonanzfrequenz. Des Weiteren ist dem Diagramm zu entnehmen, dass wenn die Ammoniak-Einspritzung gestoppt wird, sich der im SCR-Katalysator eingelagerte Ammoniak abbaut und verbraucht wird.

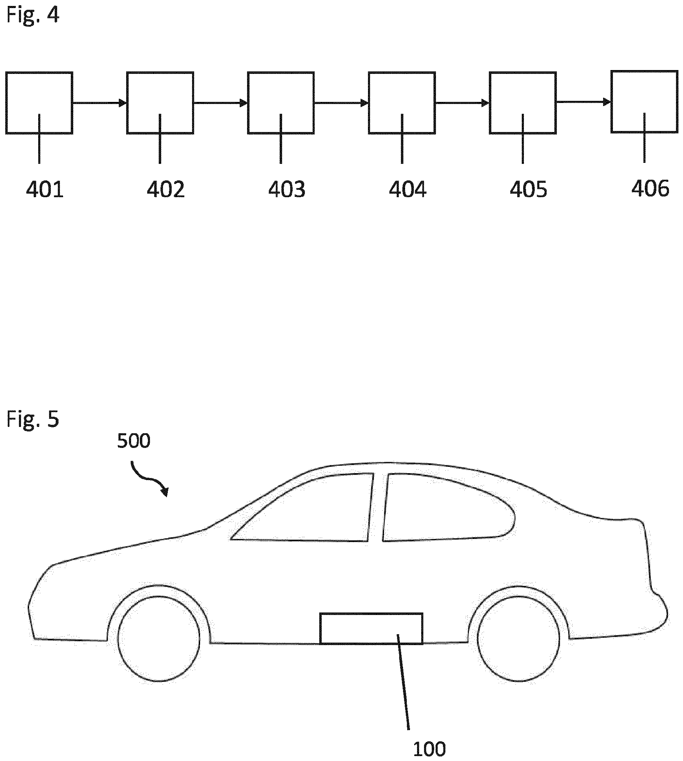

Fig. 4 zeigt ein Flussdiagramm für ein Verfahren zur Bestimmung des Alterungszustandes eines SCR-Katalysators. In Schritt 401 erfolgt die Ermittlung der Referenzparameter für einen späteren Vergleich. Die Initialisierung der Messung erfolgt in Schritt 402. Hier wird der SCR-Katalysator in einem konstanten Betriebspunkt, oder alterativ im transienten Betrieb, ohne Ammoniak-Einspritzung betrieben, sodass kein oder wenig Ammoniak in dem SCR-Katalysator eingelagert ist. Eine konstante Einspritzung von Ammoniak bis zur Erreichung der Sättigung des SCR-Katalysators erfolgt in Schritt 403. In Schritt 404 erfolgt die Messung der Ammoniakbeladung des SCR-Katalysators während der konstanten Ammoniak-Einspritzung. Der Vergleich der gemessenen Parameter und der Referenzparameter erfolgen in Schritt 405. Zuletzt wird in Schritt 406 aus dem Vergleich der gemessenen Parameter der Alterungszustand des SCR-Katalysators bestimmt. Fig. 5 zeigt ein Fahrzeug 500 mit einem SCR-Katalysator 110 und einem Katalysatormesssystem 100. Das Katalysatormesssystem 100 kann den Alterungszustand des SCR-Katalysators 110 erfassen.

## Patentansprüche

1. Katalysatormesssystem (100) zur Alterungsbestimmung eines SCR-Katalysators (110) für ein Fahrzeug, aufweisend:
ein Steuergerät (120), zum Steuern des Katalysatormesssystems (100) und zur Auswertung der Messdaten,
ein SCR-Katalysator (110), zur Reinigung der Abgase eines Fahrzeugs,
eine Hochfrequenz-Messanordnung (130), zur Messung der Ammoniakbeladung des SCR-Katalysators (110), und
ein Ammoniak-Dosiersystem (140), zum Einspritzen von Ammoniak in eine Abgasanlage (220) des Fahrzeugs,
wobei das Steuergerät (120) ausgeführt ist, das Ammoniak-Dosiersystem (140) anzuleiten gezielt Ammoniak in die Abgasanlage (220) einzuspritzen oder gezielt kein Ammoniak in die Abgasanlage (220) einzuspritzen, und
wobei das Steuergerät (120) ausgeführt ist, die von der Hochfrequenz-Messanordnung (130) gemessenen Daten auszuwerten und mit einem vordefinierten Schwellwert zu vergleichen, um daraus den Alterungszustand des SCR-Katalysators (110) zu bestimmen,
wobei das Ammoniak-Dosiersystem (140) ausgeführt ist,
zur Initialisierung der Messung in einem konstanten Betriebspunkt des SCR-Katalysators (110) kein Ammoniak einzuspritzen, sodass kein oder wenig Ammoniak im SCR-Katalysator (110) eingelagert ist, und bis zur Sättigung des SCR-Katalysators (110) Ammoniak in die Abgasanlage (220) des Fahrzeugs einzuspritzen; und
wobei die Hochfrequenz-Messanordnung (130) eingerichtet ist, die Messung der Ammoniakbeladung während der Ammoniakeinspritzung durchzuführen.

2. Katalysatormesssystem (100) gemäß Anspruch 1,
wobei die Hochfrequenz-Messanordnung (130) ausgeführt ist, die Resonanzfrequenz des SCR-Katalysators (110) zu messen.

3. Katalysatormesssystem (100) gemäß einem der vorhergehenden Ansprüche,
wobei der vordefinierte Schwellwert die Resonanzfrequenz des voll beladenen SCR-Katalysators (110) im Neuzustand ist.

4. Katalysatormesssystem (100) gemäß einem der Ansprüche 1 bis 2,
wobei der vordefinierte Schwellwert die Resonanzfrequenz des voll beladenen SCR-Katalysators (110) einer vorangegangenen Messung, vorzugsweise der direkt vorangegangenen Messung ist.

5. Katalysatormesssystem (100) gemäß Anspruch 3 oder 4,
wobei das Steuergerät (120) ausgeführt ist, durch den Vergleich von gemessener Resonanzfrequenz und dem vordefinierten Schwellwert der Resonanzfrequenz den Alterungszustand des SCR-Katalysators (110) zu bestimmen.

6. Katalysatormesssystem (100) gemäß Anspruch 1,
wobei die Hochfrequenz-Messanordnung (130) ausgeführt ist, die dielektrischen Verluste des SCR-Katalysators (110) zu messen.

7. Katalysatormesssystem (100) gemäß Anspruch 6,
wobei der vordefinierte Schwellwert die dielektrischen Verluste des voll beladenen SCR-Katalysators (110) im Neuzustand sind.

8. Katalysatormesssystem (100) gemäß Anspruch 6,
wobei der vordefinierte Schwellwert die dielektrischen Verluste des voll beladenen SCR-Katalysators (110) einer vorangegangenen Messung, vorzugsweise der direkt vorangegangenen Messung sind.

9. Katalysatormesssystem (100) gemäß einem der Ansprüche 6 bis 8,
wobei das Steuergerät (120) ausgeführt ist, durch den Vergleich der gemessenen dielektrischen Verluste und dem Schwellwert der dielektrischen Verluste den Alterungszustand des SCR-Katalysators (110) zu bestimmen.

10. Fahrzeug (500) mit einem SCR-Katalysator (110) und einem Katalysatormesssystem (100) gemäß einem der vorhergehenden Ansprüche zur Bestimmung des Alterungszustandes eines SCR-Katalysators (110).

11. Verfahren zur Bestimmung des Alterungszustandes eines SCR-Katalysators, folgende Schritte aufweisend:
- Ermitteln (401) eines Schwellwertes;
- Initialisieren (402) der Messung, indem der SCR-Katalysator in einem konstanten Betriebspunkt ohne Ammoniak-Einspritzung betrieben wird, sodass kein oder wenig Ammoniak im SCR-Katalysator eingelagert ist;
- Einspritzen (403) von Ammoniak in die Abgasanlage des Fahrzeugs bis die Sättigung des SCR-Katalysators erreicht ist;
- Messen (404) der Ammoniakbeladung des SCR-Katalysators während der Ammoniak-Einspritzung mittels einer Hochfrequenz-Messanordnung;
- Vergleichen (405) der gemessenen Daten mit dem vordefinierten Schwellwert;
- Bestimmen (406) des Alterungszustandes des SCR-Katalysators unter Berücksichtigung des Vergleichs der gemessenen Daten mit den vordefinierten Schwellwert.

12. Programmelement, das, wenn es auf einem Steuergerät (120) eines Katalysatormesssystems (100) ausgeführt wird, das Katalysatormesssystem (100) anleitet, das Verfahren gemäß Anspruch 11 durchzuführen.

13. Computerlesbares Medium, auf dem ein Programmelement gemäß Anspruch 12 gespeichert ist.

## Claims

1. Catalyst-measuring system (100) for determining the aging of an SCR catalytic converter (110) for a vehicle, having:
a control device (120) for controlling the catalyst-measuring system (100) and for evaluating the measurement data,
an SCR catalytic converter (110) for purifying the exhaust gases of a vehicle,
a high-frequency measuring arrangement (130) for measuring the ammonia loading of the SCR catalytic converter (110), and
an ammonia-metering system (140) for injecting ammonia into an exhaust system (220) of the vehicle,
wherein the control device (120) is designed to induce the ammonia-metering system (140) to selectively inject ammonia into the exhaust system (220) or to selectively inject no ammonia into the exhaust system (220), and
wherein the control device (120) is designed to evaluate the data measured by the high-frequency measuring arrangement (130) and to compare it with a predefined threshold value, in order to determine the state of aging of the SCR catalytic converter (110) therefrom, wherein, in order to initialize the measurement at a constant operating point of the SCR catalytic converter (110), the ammonia-metering system (140) is designed not to inject ammonia so that little or no ammonia is stored in the SCR catalytic converter (110), and to inject ammonia into the exhaust system (220) of the vehicle until saturation of the SCR catalytic converter (110) occurs; and
wherein the high-frequency measuring arrangement (130) is configured to carry out the measurement of the ammonia loading during the injection of ammonia.

2. Catalyst-measuring system (100) according to Claim 1,
wherein the high-frequency-measuring arrangement (130) is designed to measure the resonance frequency of the SCR catalytic converter (110).

3. Catalyst-measuring system (100) according to one of the preceding claims,
wherein the predefined threshold value is the resonance frequency of the fully loaded SCR catalytic converter (110) in the new state.

4. Catalyst-measuring system (100) according to one of Claims 1 to 2,
wherein the predefined threshold value is the resonance frequency of the fully loaded SCR catalytic converter (110) of a preceding measurement, preferably of the directly preceding measurement.

5. Catalyst-measuring system (100) according to Claim 3 or 4,
wherein the control device (120) is designed to determine the state of aging of the SCR catalytic converter (110) by comparing the measured resonance frequency and the predefined threshold value of the resonance frequency.

6. Catalyst-measuring system (100) according to Claim 1,
wherein the high-frequency-measuring arrangement (130) is designed to measure the dielectric losses of the SCR catalytic converter (110).

7. Catalyst-measuring system (100) according to Claim 6,
wherein the predefined threshold value is the dielectric losses of the fully loaded SCR catalytic converter (110) in the new state.

8. Catalyst-measuring system (100) according to Claim 6,
wherein the predefined threshold value is the dielectric losses of the fully loaded SCR catalytic converter (110) of a preceding measurement, preferably of the directly preceding measurement.

9. Catalyst-measuring system (100) according to one of Claims 6 to 8,
wherein the control device (120) is designed to determine the state of aging of the SCR catalytic converter (110) by comparing the measured dielectric losses and the threshold value of the dielectric losses.

10. Vehicle (500) having an SCR catalytic converter (110) and a catalyst-measuring system (100) according to one of the preceding claims in order to determine the state of aging of an SCR catalytic converter (110).

11. Method for determining the state of aging of an SCR catalytic converter, having the following steps:
- determining (401) a threshold value;
- initializing (402) the measurement by operating the SCR catalytic converter at a constant operating point without ammonia injection so that little or no ammonia is stored in the SCR catalytic converter;
- injecting (403) ammonia into the exhaust system of the vehicle until saturation of the SCR catalytic converter is brought about;
- measuring (404) the ammonia loading of the SCR catalytic converter during the injection of ammonia by means of a high-frequency-measuring arrangement;
- comparing (405) the measured data with the predefined threshold value;
- determining (406) the state of aging of the SCR catalytic converter taking into account the comparison of the measured data with the predefined threshold value.

12. Program element which, when executed on a control device (120) of a catalyst-measuring system (100), instructs the catalyst-measuring system (100) to carry out the method according to Claim 11.

13. Computer-readable medium on which a program element according to Claim 12 is stored.

## Revendications

1. Système de mesure de convertisseur catalytique (100) destiné à déterminer le vieillissement d'un convertisseur catalytique SCR (110) d'un véhicule, ledit système comprenant :
un dispositif de commande (120) destiné à commander le système de mesure de convertisseur catalytique (100) et à évaluer les données de mesure,
un convertisseur catalytique SCR (110) destiné à nettoyer les gaz d'échappement d'un véhicule,
un dispositif de mesure à haute fréquence (130) destiné à mesurer la charge d'ammoniac du convertisseur catalytique SCR (110), et
un système de dosage d'ammoniac (140) destiné à injecter de l'ammoniac dans une installation de gaz d'échappement (220) du véhicule,
le dispositif de commande (120) étant conçu pour commander le système de dosage d'ammoniac (140), injecter spécifiquement de l'ammoniac dans l'installation de gaz d'échappement (220) ou ne pas injecter spécifiquement de l'ammoniac dans l'installation de gaz d'échappement (220), et
le dispositif de commande (120) étant conçu pour évaluer les données mesurées par le dispositif de mesure à haute fréquence (130) et pour les comparer à une valeur de seuil prédéfinie afin de déterminer à partir de là le vieillissement du convertisseur catalytique SCR (110),
le système de dosage d'ammoniac (140) étant conçu pour initialiser la mesure à un point de fonctionnement constant du convertisseur catalytique SCR (110), pour ne pas injecter d'ammoniac, de manière à n'emmagasiner que peu ou pas d'ammoniac dans le convertisseur catalytique SCR (110), et pour injecter de l'ammoniac dans l'installation de gaz d'échappement (220) du véhicule jusqu'à la saturation du convertisseur catalytique SCR (110) ; et
le dispositif de mesure à haute fréquence (130) étant adapté pour effectuer la mesure de la charge d'ammoniac pendant l'injection d'ammoniac.

2. Système de mesure de convertisseur catalytique (100) selon la revendication 1,
le dispositif de mesure à haute fréquence (130) étant conçu pour mesurer la fréquence de résonance du convertisseur catalytique SCR (110).

3. Système de mesure de convertisseur catalytique (100) selon l'une des revendications précédentes,
la valeur de seuil prédéfinie étant la fréquence de résonance du convertisseur catalytique SCR (110) entièrement chargé lorsqu'il est neuf.

4. Système de mesure de convertisseur catalytique (100) selon l'une des revendications 1 et 2,
la valeur de seuil prédéfinie étant la fréquence de résonance du convertisseur catalytique SCR (110) entièrement chargé d'une mesure précédente, de préférence de la mesure immédiatement précédente.

5. Système de mesure de convertisseur catalytique (100) selon la revendication 3 ou 4,
l'unité de commande (120) étant conçue pour déterminer l'état de vieillissement du convertisseur catalytique SCR (110) en comparant la fréquence de résonance mesurée et la valeur de seuil prédéfinie de la fréquence de résonance.

6. Système de mesure de convertisseur catalytique (100) selon la revendication 1,
le dispositif de mesure à haute fréquence (130) étant conçu pour mesurer les pertes diélectriques du convertisseur catalytique SCR (110).

7. Système de mesure de convertisseur catalytique (100) selon la revendication 6,
la valeur de seuil prédéfinie étant les pertes diélectriques du convertisseur catalytique SCR (110) entièrement chargé lorsqu'il est neuf.

8. Système de mesure de convertisseur catalytique (100) selon la revendication 6,
la valeur de seuil prédéfinie étant les pertes diélectriques du convertisseur catalytique SCR (110) entièrement chargé d'une mesure précédente, de préférence de la mesure immédiatement précédente.

9. Système de mesure de convertisseur catalytique (100) selon l'une des revendications 6 à 8,
l'unité de commande (120) étant conçue pour déterminer l'état de vieillissement du convertisseur catalytique SCR (110) en comparant les pertes diélectriques mesurées et la valeur de seuil des pertes diélectriques.

10. Véhicule (500) équipé d'un convertisseur catalytique SCR (110) et d'un système de mesure de convertisseur catalytique (100) selon l'une des revendications précédentes pour déterminer l'état de vieillissement d'un convertisseur catalytique SCR (110).

11. Procédé de détermination de l'état de vieillissement d'un convertisseur catalytique SCR, ledit procédé comprenant les étapes suivantes :
- déterminer (401) une valeur de seuil ;
- initialiser (402) la mesure en ce que le convertisseur catalytique SCR fonctionne à un point de fonctionnement constant sans injection d'ammoniac de manière à emmagasiner peu ou pas d'ammoniac dans le convertisseur catalytique SCR ;
- injecter (403) de l'ammoniac dans l'installation de gaz d'échappement du véhicule jusqu'à ce que le convertisseur catalytique SCR soit saturé ;
- mesurer (404) la charge d'ammoniac du convertisseur catalytique SCR pendant l'injection d'ammoniac au moyen d'un dispositif de mesure à haute fréquence ;
- comparer (405) les données mesurées avec la valeur de seuil prédéfinie ;
- déterminer (406) l'état de vieillissement du convertisseur catalytique SCR, par prise en compte de la comparaison des données mesurées avec la valeur de seuil prédéfinie.

12. Élément de programme qui, lorsqu'il est exécuté sur une unité de commande (120) d'un système de mesure de convertisseur catalytique (100), ordonne au système de mesure de convertisseur catalytique (100) de mettre en œuvre le procédé selon la revendication 11.

13. Support lisible par ordinateur sur lequel un élément de programme selon la revendication 12 est mémorisé.
